Europäisches Patentamt

(19) European Patent Office

Office européen des brevets

(11) Numéro de publication: **0 170 532**
**B1**

(12) **FASCICULE DE BREVET EUROPÉEN**

(45) Date de publication du fascicule du brevet:
24.02.88

(21) Numéro de dépôt: **85400812.5**

(22) Date de dépôt: **25.04.85**

(51) Int. Cl.⁴: **F 16 B 5/12**

(54) **Fixation invisible sur un support d'un élément rapporté.**

(30) Priorité: **25.05.84 FR 8408622**

(43) Date de publication de la demande:
**05.02.86 Bulletin 86/6**

(45) Mention de la délivrance du brevet:
**24.02.88 Bulletin 88/8**

(84) Etats contractants désignés:
**DE GB IT**

(56) Documents cité:
**FR-A-1 394 502**

(73) Titulaire: **AUTOMOBILES PEUGEOT, 75, avenue de
la Grande Armée, F-75116 Paris (FR)**
Titulaire: **AUTOMOBILES CITROEN, 62 Boulevard
Victor- Hugo, F-92200 Neuilly- sur- Seine (FR)**

(72) Inventeur: **Coffy, Didier Jean, 2, rue Robert
Desnos, F-78210 St Cry l'Ecole (FR)**

(74) Mandataire: **Boivin, Claude, 9, rue Edouard-
Charton, F-78000 Versailles (FR)**

EP 0 170 532 B1

## Description

La mise en place et la fixation sur un support à l'aide de moyens de fixation invisibles, d'éléments longs rapportés, par exemple d'enjoliveurs ou de bandeaux de protection latérale sur la carrosserie d'un véhicule automobile, sont toujours délicates et nécessitent l'utilisation de moyens de verrouillage complexes dont l'efficacité reste aléatoire.

Le document FR-A- 1 394 502 décrit un élément destiné à être fixé sur un support à l'aide d'un organe élastique accouplé audit élément et pouvant être accroché à un pion d'ancrage solidaire du support, la zone d'accrochage de l'organe élastique au pion d'ancrage ne faisant pas, à l'état libre, saillie par rapport au plan d'appui de l'embase de l'élément sur le support. Mais cet élément nécessite un accostage en aveugle, générateur d'imprécision et de perte de temps au montage.

La présente invention a pour objet un élément dont la fixation ne présente pas ces inconvénients et qui est caractérisé en ce qu'il est associé à un moyen amovible propre à maintenir cette zone d'accrochage en saillie par rapport à ce plan d'appui.

Il est facile, dans ces conditions, de mettre en place l'élément sur le support et d'accrocher l'organe élastique au pion d'ancrage. Après la pose des éléments, on retire le moyen de maintien de sorte que l'organe élastique reprend sa forme initiale et vient plaquer sur le support l'embase de l'élément.

Dans un mode de réalisation particulier de l'invention, l'organe élastique est constitué par une lame galbée dont les extrémités sont engagées sous des barrettes transversales solidaires de l'élément à fixer.

Pour assurer son accrochage au pion d'ancrage, la lame galbée peut comporter dans sa partie médiane une boutonnière dont une extrémité élargie a des dimensions lui permettant d'être engagée par le pion d'ancrage.

Le moyen pour maintenir la zone d'accrochage de la lame en saillie par rapport au plan d'appui de l'embase de l'élément peut être constitué par une pièce allongée pouvant être introduite, en déformant élastiquement la lame, entre la partie médiane de cette lame et l'embase de l'élément. Cette pièce peut par exemple être constituée par une épingle à deux branches.

On a décrit ci-après, à titre d'exemple non limitatif, un mode de réalisation d'un élément pouvant être fixé sur un support selon l'invention, avec référence au dessin annexé dans lequel:

La Figure 1 est une vue en coupe longitudinale suivant I-I de la Figure 2, montrant l'élément accroché au support, mais non encore bridé sur celui-ci;

La Figure 2 en est une coupe suivant II-II de la Figure 1;

La Figure 3 en est une coupe suivant III-III de la Figure 1.

Au dessin, on voit un élément 1 qui doit être fixé sur un support 2. Cet élément 1 est constitué par exemple, par un bandeau qui doit être fixé sur la carrosserie d'un véhicule automobile.

L'élément 1 a une section en U et ses bords d'appui sont de préférence garnis de semelles intercalaires souples 3 venant au contact du support 2. Il présente, en un endroit intermédiaire de sa hauteur, une série de paires de barrettes transversales internes 1a et 1b, ces paires correspondant chacune à un point de fixation sur le support 2, le point de fixation étant constitué par un pion d'ancrage 4 dont la tête 4a est légèrement écartée de la paroi du support.

L'élément 1 est équipé d'une série de lames élastiques 5 galbées en forme de U évasé, dont chacune est associée à une paire de barrettes 1a et 1b et dont la largeur est un peu inférieure à la largeur interne de l'élément 1; les extrémités recourbées 5a et 5b des lames sont engagées sous les barrettes 1a et 1b. Chacune de ces lames présente une boutonnière transversale 6 à mi-longueur. L'une des extrémités de cette boutonnière se trouve au centre de la lame; son extrémité opposée est élargie comme indiqué en 6a et a un diamètre suffisant pour permettre le passage de la tête 4a d'un pion d'ancrage 4.

A l'état libre, la lame 5 s'étend sur une hauteur inférieure à celle de l'élément 1, et est donc en retrait par rapport au plan d'appui des semelles 3. Mais, avant le montage de cet élément sur le support 2, une épingle 7, dont la forme est analogue à celle d'une épingle à cheveux, a été engagée latéralement sous les semelles souples 3 et sur la partie inférieure médiane 5c de la lame 5, de part et d'autre de sa boutonnière 6. Cette opération a entraîné une augmentation de la flèche de la lame dont la partie médiane 5c fait alors saillie sous l'élément 1 et qui est maintenant bridée sur cet élément, ses extrémités 5a et 5b étant arc-boutées sur les barrettes 1a et 1b.

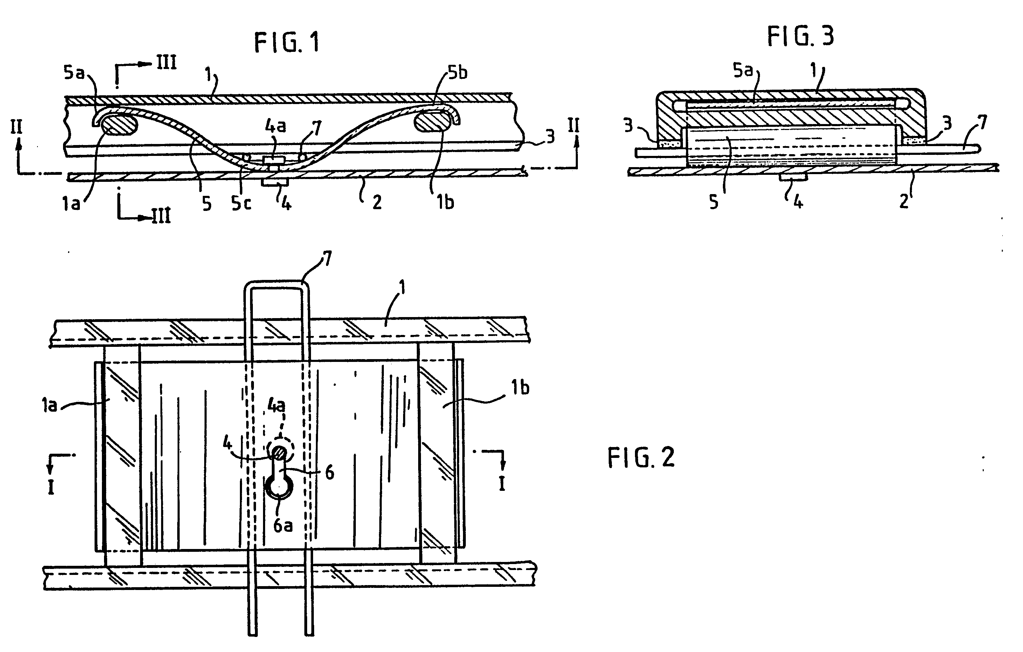

Pour fixer l'élément 1 sur le support 5, on le met en place en engageant les têtes 4a des éléments d'ancrage 4 dans les extrémités élargies 6a des boutonnières 6; lors de cette opération, un certain jeu existe entre l'élément et le support, comme le montre la Figure 1, de sorte qu'on peut voir l'alignement des têtes d'ancrage 4a et vérifier leur engagement dans les boutonnières.

Puis, on déplace latéralement l'élément 1 de façon qu'il prenne sa position définitive, les pions d'ancrage 4 coulissant dans les boutonnières 6 et venant se placer à l'extrémité de celles-ci opposée à leur extrémité élargie (Figure 2).

Il ne reste plus qu'à retirer les épingles 7. Les lames 5 sont libérées et tendent à reprendre leur forme initiale en bridant l'élément 1 sur le support 2.

## Revendications

1. Elément destiné à être fixé sur un support (2) à l'aide d'un organe élastique (5) accouplé audit élément et pouvant être accroché à un pion d'ancrage (4) solidaire du support (2), la zone d'accrochage (5c) de l'organe élastique (5) au pion d'ancrage (4) ne faisant pas, à l'état libre, saillie par rapport au plan d'appui de l'embase de l'élément (1) sur le support (2),

caractérisé en ce que l'élément (1) est associé à un moyen amovible (7) propre à maintenir cette zone d'accrochage (5c) en saillie par rapport à ce plan d'appui.

2. Elément selon la revendication 1, caractérisé en ce que l'organe élastique (5) est constitué par une lame galbée dont les extrémités (5a et 5b) sont engagées sous des barrettes transversales (1a et 1b) solidaires de l'élément (1) à fixer.

3. Elément selon la revendication 2, caractérisé en ce que la lame galbée (5) comporte dans sa partie médiane une boutonnière (6) dont une extrémité élargie (6a) a des dimensions lui permettant d'être engagée par le pion d'ancrage (4).

4. Elément selon les revendications 2 ou 3, caractérisé en ce que le moyen pour maintenir la zone d'accrochage (5c) de la lame (5) en saillie par rapport au plan d'appui de l'embase de l'élément (1) est constitué par une pièce allongée (7) pouvant être introduite, en déformant élastiquement la lame, entre la partie médiane de cette lame et l'embase de l'élément.

5. Elément selon la revendication 4, caractérisé en ce que ladite pince (7) est constituée par une épingle à deux branches.

## Patentansprüche

1. Bauelement zur Befestigung auf einem Träger (2) mittels eines elastischen Organs (5), das an besagtem Bauelement angekoppelt ist und an einem mit dem Träger (2) kraftschlüssig verbundenen Verankerungsstift (4) aufhängbar ist, wobei die Aufhängezone (5c) des elastischen Organs (5) am Verankerungsstift (4) im freien Zustand nicht über die Stützebene der Auflage des Bauelements (1) auf dem Träger (2) vorspringt, dadurch gekennzeichnet, daß das Bauelement (1) mit einem herausziehbaren Mittel (7) versehen ist, das dazu geeignet ist, diese Aufhängezone (5c) in der über diese Stützebene vorspringenden Stellung festzuhalten.

2. Bauelement nach Anspruch 1, dadurch gekennzeichnet, daß das elastische Organ (5) durch eine ausgebauchte Lamelle gebildet wird, deren Enden (5a und 5b) unter mit dem zu befestigenden Bauelement (1) kraftschlüssig verbundenen Querstangen (1a und 1b) eingespannt sind.

3. Bauelement nach Anspruch 2, dadurch gekennzeichnet, daß die ausgebauchte Lamelle (5) in ihrem mittleren Teil mit einem Knopfloch (6) versehen ist, dessen eines, verbreitertes Ende (6a) Abmessungen aufweist, die seine Verbindung mit dem Verankerungsstift (4) zulassen.

4. Bauelement nach den Ansprüchen 2 oder 3, dadurch gekennzeichnet, daß die Mittel zum Festhalten der Aufhängezone (5c) der Lamelle (5) in der über die Stützebene der Auflage des Bauelements (1) vorspringenden Stellung durch ein längliches Bauteil (7) gebildet werden, das unter elastischer Deformation der Lamelle zwischen dem mittleren Teil dieser Lamelle und die Auflage des Bauelements einführbar ist.

5. Bauelement nach Anspruch 4, dadurch gekennzeichnet, daß besagtes Bauteil (7) aus einer Nadel mit zwei Schenkeln besteht.

## Claims

1. Element designed to be secured to a support (2) by means of an elastic device (5) coupled to the said element and able to be hooked to an anchoring pion (4) integral with the support (2), the hooking zone (5c) of the elastic device (5) at the anchoring pion (4) not, in the free state, being made to project in relation to the support plane of the seating of the element (1) on the support (2), characterized in that the element (1) is connected to a moveable device (7) suitable for keeping this directly mounted hooking zone (5c) in relation to this support plane.

2. Element according to claim 1, characterized in that the elastic device (5) consists of a curved blade, the extremities (5a and 5b) of which are engaged under transversal small bars (1a and 1b) integral with the element (1) to be secured.

3. Element according to claim 2, characterized in that the curved blade (5) comprises in its median part an oblong opening (6) whose enlarged extremity (6a) has dimensions which enable it to be engaged by the anchoring pion (4).

4. Element according to claims 2 or 3, characterized in that the device to maintain the directly mounted hooking zone (5c) of the blade (5) in relation to the support plane of the seating of the element (1) consists of an elongated part (7) able to be introduced, by elastically deforming the blade, between the median part of this blade and the element seating.

5. Element according to claim 4, characterized in that the said part (7) consists of a two-branched pin.

FIG.1

FIG.3

FIG.2

0 170 532